# EUROPÄISCHE PATENTANMELDUNG

(11) **EP 0 895 892 A2**
(43) Veröffentlichungstag der Anmeldung: **10.02.1999**
(21) Anmeldenummer: 98114535.2
(22) Anmeldetag: 03.08.1998
(51) Int. Cl.: B60K 37/02, G01D 11/28

(54) **Anzeigeinstrument**

(30) Priorität: 04.08.1997 DE 19733650
(71) Anmelder: Valeo Electronics GmbH & Co. KG, 75196 Remchingen (DE)
(72) Erfinder: Kauff, Helmut, 75196 Remchingen (DE)
(74) Vertreter: COHAUSZ HANNIG DAWIDOWICZ & PARTNER

(57) **Zusammenfassung**

Die Erfindung betrifft ein Anzeigeinstrument (1) mit mindestens einem beweglich gelagerten Anzeigeorgan (3), insbesondere einem Zeiger, und einer Skala oder einem Skalenbild (5), wobei das Anzeigeinstrument mehrere voneinander unabhängige Anzeigeorgane aufweist und die zu einem Anzeigeorgan (3) gehörige Skala bzw. das zugehörige Skalenbild (5) mittels einer elektronisch angesteuerten Anzeige (2) darstellbar ist und in der Anzeige (2) mehrere Skalenbilder oder Skalen (5) für die unabhängigen Anzeigeorgane (3) gleichzeitig und/oder in beliebiger zeitlicher Reihenfolge an derselben und/oder verschiedenen Positionen auf der Anzeigefläche (2a) der Anzeige (2) darstellbar sind.

## Beschreibung

Die vorliegende Erfindung betrifft ein Anzeigeinstrument mit mindestens einem beweglich gelagerten Anzeigeorgan, insbesondere einem Zeiger, und einer Skala oder einem Skalenbild.

Bei herkömmlichen Instrumenten kommen im wesentlichen zwei Anzeigetechniken zum Einsatz. Bei der ersten und zeitlich älteren Anzeigetechnik, werden Meßwerte mittels Zeigerinstrumenten dargestellt, wobei ein Zeiger vor einem Zifferblatt, auf dem das sogenannte Skalenbild oder die Skala aufgetragen ist, bewegt bzw. verdreht oder verschwenkt. Die Zeigerinstrumente wurden durch den Einsatz der Digitaltechnik durch Digitalanzeigen, z.B. LCD oder fluoreszierenden Anzeigen, ersetzt. Eine entsprechende Entwicklung ist auch in der Automobiltechnik zu beobachten. In Armaturenbrettern werden Zeigerinstrumente hauptsächlich für die Funktion Tachometer, Drehzahlmesser etc. benutzt. Informationen allgemeiner Art, z.B. Informationen aus dem Bordcomputer, wie z.B. der Durchschnittsgeschwindigkeit, dem Durchschnittswert des Kraftstoffverbrauchs, der Temperatur oder der Stationsanzeige bzw. Frequenzanzeige eines Radios, werden heute mittels Digitalanzeigen vorgenommen. Die Menge der dem Fahrer zur Verfügung gestellten Informationen hat in den letzten Jahren stetig zugenommen. Der Platz, der für die Anzeigefläche in Fahrzeugen zur Verfügung steht, ist jedoch auch bedingt durch den Sichtbereich des Fahrers begrenzt. Es besteht somit die Schwierigkeit, die große Menge der verschiedensten Information sinnvoll darzustellen.

Aus der GB 2 266 375 ist ein Anzeigeinstrument für ein Fahrzeug bekannt, bei dem der Betrachter durch ein Sichtfenster an ein und derselben Stelle entweder ein Zeigerinstrument oder ein Anzeigeinstrument mit digitaler Anzeige sieht. Hierzu hat das Anzeigeinstrument gemäß der GB 2 266 375 eine durchsichtige schräg gestellte Glasscheibe, hinter der ein Zeigerinstrument angeordnet ist. Im rechten Winkel zum Zeigerinstrument oberhalb der schräg gestellten Glasscheibe, das heißt vom Betrachter aus gesehen vor der schräg gestellten Glasscheibe, ist an der oberen Seite des Anzeigeinstruments das elektronische Display angeordnet. Ist das elektronische Display ausgeschaltet, so kann der Betrachter des Anzeigeinstruments durch die schräg gestellte Glasscheibe das Zeigerinstrument sehen. Ist dagegen die elektronische Anzeige angeschaltet, so wird die Glasscheibe von oben beleuchtet, so daß sie für den Betrachter undurchsichtig wird, da der Vorderraum der Glasscheibe heller als der hinter der Glasscheibe liegende Raum ist - der Betrachter sieht daher nur das elektronische Display.

Weiterhin ist aus der FR 2 729 345 ein Anzeigeinstrument mit einer elekro-optischen Anzeige bekannt, bei dem einem Zeiger eine auf der Anzeige darstellbare und veränderbare Werteskala zugeordnet ist, wobei der Zeiger aus dem Nutzbereich der elekro-optischen Anzeige bewegt werden kann, um auf der gesamten Anzeige großflächig eine Information darstellbar ist.

Diese bekannte Anzeige weist nur einen Zeiger auf, dem eine veränderliche Skala zugeordnet ist, und kann daher zu einer Zeit maximal nur eine Information zur Darstellung bringen. Wegen der Fülle der heute zu verarbeitenden und darzustellenden Fahrzeuginformationen erweist sich diese Anzeige als unzureichend.

Aufgabe der vorliegenden Erfindung ist es, ein Anzeigeinstrument bereitzustellen, bei dem die Vorteile von Zeigerinstrumenten und elektronisch angesteuerten Anzeigen jeweils optimal ausgenutzt werden.

Diese Aufgabe wird erfinderisch dadurch gelöst, daß das Anzeigeinstrument mehrere voneinander unabhängige Anzeigeorgane aufweist, wobei die zu einem Anzeigeorgan (3) gehörige Skala bzw. das zugehörige Skalenbild (5) mittels einer elektronisch angesteuerten Anzeige (2) darstellbar ist und in der Anzeige (2) mehrere Skalenbilder oder Skalen (5) für die unabhängigen Anzeigeorgane (3) gleichzeitig und/oder in beliebiger zeitlicher Reihenfolge an derselben und/oder verschiedenen Positionen auf der Anzeigefläche (2a) der Anzeige (2) darstellbar sind.

Ein derartiges Anzeigeinstrument besteht vorteilhaft aus einer großflächigen Anzeigefläche, zum Beispiel einer LCD-Dotmatrix, die frei programmierbar ist. Am Rand dieser Anzeigefläche können mehrere voneinander unabhängige Zeigerinstrumente angeordnet werden, wobei die Zeiger dieser Zeigerinstrumente über die Anzeigefläche verschwenkbar sind, so daß sie zusammen mit der von der Anzeigefläche dargestellten Skala oder dem Anzeigen- bzw. Skalenbild ein Ablesen eines Wertes, zum Beispiel der Geschwindigkeit oder der Öltemperatur oder einer anderen Information, möglich ist.

Das erfindungsgemäße Anzeigeinstrument ist so ausgestaltet, daß mehrere Zeiger an verschiedenen Stellen die Anzeigefläche gleichzeitig oder nacheinander übergreifen können, so daß die Anzeigefläche beliebig in verschiedene einzelne Anzeigeinstrumente unterteilt werden kann.

Der Antrieb eines Zeigers kann dabei im eingebauten Zustand vom Betrachter des Anzeigeinstruments aus gesehen sowohl hinter als auch vor der Anzeige angeordnet sein. Insbesondere um ungestörte Ablesekonditionen zu erreichen, kann die Anzeigeebene eines Anzeigeinstruments im Armaturenbrett weit nach hinten gesetzt werden. Hierdurch wird störender seitlicher Lichteinfall verhindert. Aufgrund der wegen Kabeln, Rohren u.ä. eingeschränkten Platzverhältnisse kann es dann vorteilhaft sein, wenn der Antrieb des Zeigers vor der Anzeige angeordnet ist.

Vorteilhaft können auch die Zeiger aus dem Sichtfeld des Betrachters des Anzeigeinstruments heraus bewegt werden, damit die gesamte Anzeigefläche z.B. der LCD-Dotmatrix für die Darstellung von anderen Informationen, zum Beispiel Grafiken oder anderen Texten oder auch einer Navigationskarte oder Fernsehsignalen, möglich ist.

Es ist vorteilhaft auch möglich, daß Zeiger von Anzeigeinstrumenten durch fensterartige Öffnungen die Anzeige durchgreifen, so daß z.B. eine Uhr realisierbar ist, bestehend aus mehreren Zeigern und einem Zifferblatt, welches durch die Anzeigefläche dargestellt ist.

Durch die elektronisch ansteuerbare Anzeigefläche ist es ferner ohne weiteres möglich, die Skaleneinteilung und die Einheiten der Skala, zum Beispiel für unterschiedliche Länder (MPH oder Km/h), umzustellen.

Die Anzeige kann entweder eine elektro-optische, -mechanische, -phoretische, -chemische oder ferroelektrische Anzeige sein. Sie kann dabei matrixförmig angeordnete Bildpunkte und/oder Segmente zur Darstellung von Informationen, wie zum Beispiel Buchstaben oder Zahlen, aufweisen. Die Aufteilung der Anzeigefläche in Bildpunkte und/oder Segmente kann bedarfsorientiert erfolgen.

Alternativ zu den genannten Anzeigearten kann die Anzeige auch aus einer mit einem insbesondere schwarzen Maskendruck versehenen Folie bestehen, wobei in der Maske Symbole wie z.B. Skalen oder Texte vorgesehen sind. Hinter dieser Folie kann wenigstens eine oder mehrere und insbesondere verschiedenfarbige Folien angeordnet sein. Weiterhin sind hinter dieser die Anzeige bildenden Folienanordnung Lichtquellen positioniert, die bei Bedarf elektronisch anzeuerbar sind. Bei diesen Lichtquellen kann es sich um Glühbirnen, Glimmlampen, Leuchtdioden o.ä. handeln.

Eine derartige Anzeige ist bei Lichteinfall von vorne, insbesondere unter dem üblicherweise in engen Grenzen durch die Sitzposition z.B. eines KFZ-Führers vorgegebenen Blickwinkel nicht ablesbar, da die in der Maske angeordneten Symbole bzw. Skalen als 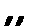 Verschwindeeffekt"-Druck ausgeführt sind.

Erst bei elektronischer Ansteuerung der Lichtquellen werden die Skalen und Symbole durch die Farbfolien von hinten hindurch farbig beleuchtet und erscheinen dadurch dem Betrachter. Somit ist es möglich, ausgewählte Skalen und Symbole nur bei Bedarf für den Betrachter sichtbar zu machen, wobei erst in diesem Fall ein zugehöriger Zeiger über die Anzeige schwenkbar ist. Die Aufmerksamkeit des Betrachters wird daher nicht durch unnötige Skalen und Symbole gestört.

Durch die immer größer werdende Flut von Informationen, die dem Fahrer oder Piloten des Verkehrsmittels zur Verfügung gestellt werden müssen, ist das erfindungsgemäße Anzeigeinstrument besonders vorteilhaft einsetzbar, da für jede Art der Information das für sie günstigste Anzeigeinstrument auswählbar ist, um die Information besonders gut darzustellen, damit die dargestellte Information möglichst schnell vom Betrachter aufgenommen und verarbeitet werden kann.

Anhand von Zeichnungen werden nachfolgend einige erfindungsgemäße Ausführungsformen näher erläutert.

Es zeigen:
- Figur 1:: ein Anzeigeinstrument, bei dem Zeiger die Anzeigefläche übergreifen;
- Figur 2:: eine Anzeigefläche, bei der Zeiger aus dem Sichtfeld des Betrachters herausgefahren sind;
- Figur 3:: eine Seitenansicht eines Anzeigeinstruments;
- Figur 4:: ein hintergrundbeleuchtetes Anzeigeinstrument;
- Figur 5:: verschiedene Anordnungsmöglichkeiten der Antriebe der Zeiger;
- Figur 6:: ein Anzeigeinstrument mit an allen Seiten angeordneten Zeigerinstrumenten.

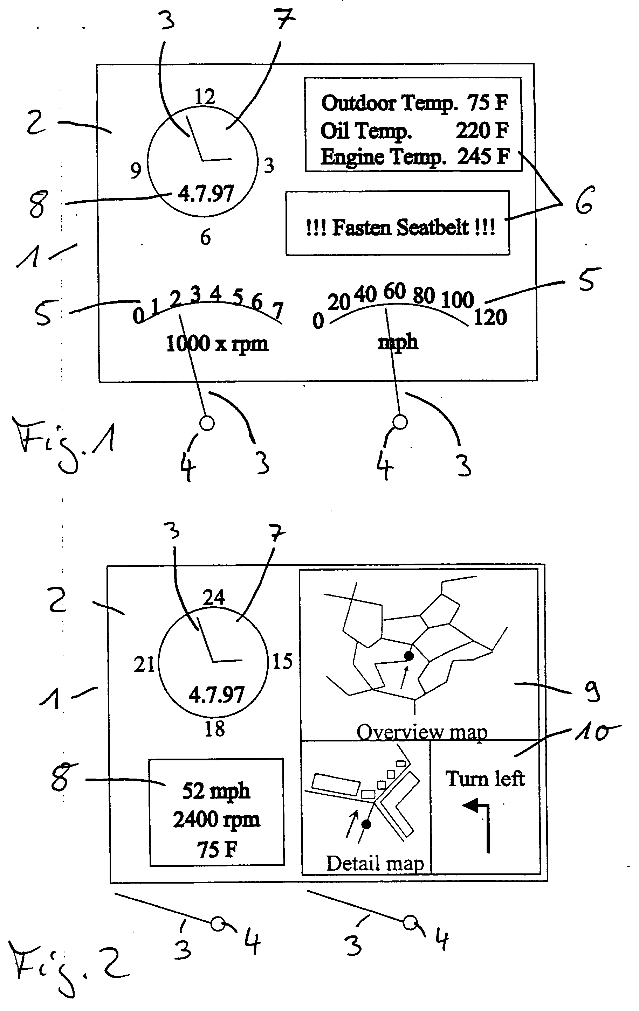

Die Figur 1 zeigt ein Anzeigeinstrument 1, bestehend aus einer digitalen Anzeigefläche 2, mit der Skalen 5 und digitale Anzeigen 6 darstellbar sind. Zudem wird mittels der Anzeigefläche 2 das Ziffernblatt einer Uhr 7 sowie eine Datumsangabe 8 dargestellt. An der unteren Seite der Anzeigefläche 2 sind um Drehpunkte 4 Zeiger 3 angeordnet, welche über den unteren Rand der Anzeigefläche 2 greifen und zusammen mit den digital dargestellten Skalen 5 Zeigerinstrumente bilden.

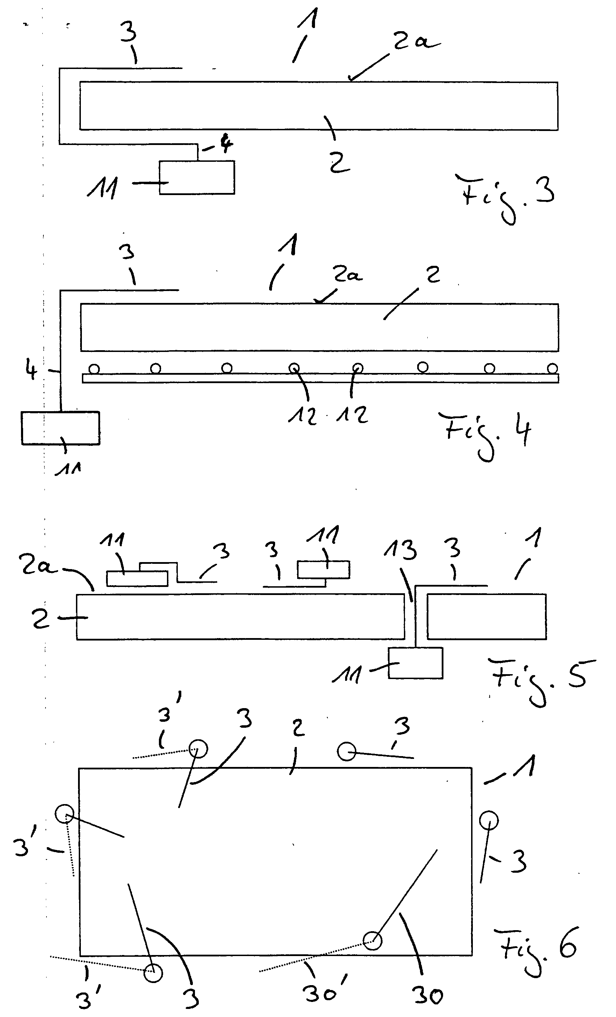

Die Figur 2 zeigt das Anzeigeinstrument 1 gemäß der Figur 1, bei dem die Zeiger 3 aus dem Sichtfeld des Betrachters der Anzeigefläche 2, herausgeschwenkt sind bzw. die Anzeigefläche nicht mehr überragen. Die Skalenanzeigen 5 sowie die digitalen Anzeigen 6 gemäß der Figur 1 sind auf der Anzeigefläche 2 gemäß der Figur 2 nicht mehr dargestellt. Dafür ist eine digitale Anzeige 8 im unteren linken Bereich der Anzeigefläche 2 dargestellt mit Hilfe derer die Geschwindigkeit des Fahrzeugs die Umdrehungszahl sowie die Außentemperatur angegeben ist. Mittels nicht dargestellter Umschaltelemente, wie zum Beispiel Schalter, Taster oder auch einer Spracheingabe, ist es möglich, die in der digitalen Anzeige 8 dargestellten Werte, zu verändern oder andere Werte anzeigen zu lassen. Die rechte Hälfte der Anzeigefläche 2 bildet ein Fahrerleitsystem 9, 10, mittels dessen Hilfe der Fahrer möglichst schnell und einfach an das gewählte Ziel herangeführt wird. Es ist jedoch auch möglich, die rechte Hälfte der Anzeigefläche 2 zur Darstellung von bewegten Grafiken, wie zum Beispiel TV-Signale, zu verwenden.

Die dargestellte Uhr, bestehend aus sich bewegenden realen Zeigern 3 und dem digital veränderbarem Zifferblatt, ist beim Anzeigeinstrument 1 gemäß der Figuren 1 und 2 nicht ausblendbar bzw. deren Fläche ist nicht für eine Darstellung von anderen Informationen verwendbar, da die Zeiger der Uhr 7 nicht aus dem Sichtfeld des Betrachters des Anzeigeinstruments 1 herausgeschwenkt werden können.

Die Figuren 3 bis 5 zeigen jeweils Seitenansichten bzw. Querschnitte eines Zeigerinstruments 1. Das Zeigerinstrument 1 gemäß der Figur 3 hat einen hinter der Anzeige 2 angeordneten Motor 11 als Verstellorgan für den Zeiger 3, der das Anzeigeinstrument seitlich umgreift, so daß der Zeiger 3 zusammen mit der Anzeigefläche 2a für den Betrachter des Anzeigeinstruments 1 ein Zeigerinstrument bildet. Bei der Figur 3 ist der Drehpunkt 4 des Zeigers 3 derart angeordnet, daß ein Herausfahren des Zeigers 3 aus dem Sichtfeld des Betrachters der Anzeigefläche 2a nicht möglich ist.

In der Figur 4 ist der Motor 11 derart angeordnet, daß sich der Drehpunkt 4 des Zeigers 3 neben der Anzeige 2 befindet, so daß ein Herausschwenken des Zeigers 3 aus dem Sichtfeld des Betrachters möglich ist. Die Anzeigen 2 der Figuren 3 und 4 unterscheiden sich voneinander dadurch, daß die Anzeige 2 gemäß Figur 4 eine Hintergrundbeleuchtung 12 hat.

Die Figur 5 zeigt mehrere Anordnungsmöglichkeiten von Motoren 11. Dabei können die Motoren entweder vor der Anzeigefläche 2a, das heißt zwischen dem Betrachter und der Anzeige, angeordnet oder aber auch, wie rechts dargestellt, hinter der Anzeige 2 angeordnet sein, wobei dann zum Beispiel der Zeiger 3 eine fensterartige Öffnung 13 der Anzeige 2 durchgreift. Ein derartiges Durchgreifen der Anzeigefläche 2 ist zum Beispiel für die Realisierung einer Uhr, bestehend aus Zeigern 3 und einem digitalen Zifferblatt (wie in den Figuren 1 und 2 dargestellt), verwendbar.

Die Figur 6 zeigt verschiedene Anordnungsmöglichkeiten von Zeigern 3, wobei die gestrichenen Bezugszeichen (3', 30') die Position der Zeiger 3, 30 angeben, bei der der Zeiger aus dem Sichtfeld des Betrachters der Anzeige 1 herausgefahren ist. Der Zeiger 30 durchgreift eine nicht dargestellte, fensterartige Öffnung der Anzeige 2. Es versteht sich von selbst, daß die Erfindung sämtliche Anordnungen von Instrumenten auf der Anzeige 2 umfaßt.

## Patentansprüche

1. Anzeigeinstrument (1) mit mindestens einem beweglich gelagerten Anzeigeorgan (3), insbesondere einem Zeiger, und einer Skala oder einem Skalenbild (5), **dadurch gekennzeichnet,** daß das Anzeigeinstrument mehrere voneinander unabhängige Anzeigeorgane aufweist, wobei die zu einem Anzeigeorgan (3) gehörige Skala bzw. das zugehörige Skalenbild (5) mittels einer elektronisch angesteuerten Anzeige (2) darstellbar ist und in der Anzeige (2) mehrere Skalenbilder oder Skalen (5) für die unabhängigen Anzeigeorgane (3) gleichzeitig und/oder in beliebiger zeitlicher Reihenfolge an derselben und/oder verschiedenen Positionen auf der Anzeigefläche (2a) der Anzeige (2) darstellbar sind.

2. Anzeigeinstrument (1) nach Anspruch 1, **dadurch gekennzeichnet,** daß der Antrieb (11) des Anzeigeorgans (3) im eingebauten Zustand vom Betrachter des Anzeigeinstruments (1) aus gesehen vor der Anzeige (2) angeordnet ist.

3. Anzeigeinstrument (1) nach Anspruch 1 oder 2, **dadurch gekennzeichnet,** daß mittels eines Eingabemediums insbesondere einem Schalter, Drehdrückelement, Mouse, Touchscreen, Joystick oder Taster oder per Spracherkennung oder einer Fernbedienung zwischen verschiedenen Anzeigearten hin- und herwechselbar ist.

4. Anzeigeinstrument (1) nach einem der vorherigen Ansprüche, **dadurch gekennzeichnet,** daß jeder Skala oder jedem Skalenbild (5) mehrere Zeiger (3) zugeordnet sind.

5. Anzeigeinstrument (1) nach einem der vorherigen Ansprüche, **dadurch gekennzeichnet,** daß das Anzeigeorgan (3, 30) und/oder die Anzeige (2) beleuchtet ist.

6. Anzeigeinstrument (1) nach einem der vorherigen Ansprüche, **dadurch gekennzeichnet,** daß mindestens ein die Anzeigefläche (2a) der Anzeige (2) zumindest teilweise übergreifendes Anzeigeorgan (3) so verfahrbar oder verschwenkbar ist, daß es im eingebauten Zustand, vom Betrachter des Anzeigeinstruments (1) aus gesehen, nicht mehr die Anzeigefläche (2) verdeckt.

7. Anzeigeinstrument (1) nach einem der vorherigen Ansprüche, **dadurch gekennzeichnet,** daß der Antrieb (11) des Anzeigeorgans (3) im eingebauten Zustand vom Betrachter des Anzeigeinstruments (1) aus gesehen hinter der Anzeige (2) ist und das Anzeigeorgan (3) die Anzeige (2) an ihrem flachen Rand umgreift oder die Anzeige (2) durch eine fensterartige Öffnung (13) durchgreift.

8. Anzeigeinstrument (1) nach einem der vorherigen Ansprüche 1 bis 5, **dadurch gekennzeichnet,** daß mittels der Anzeige (2) unterschiedliche Skaleneinteilungen und -bilder (5) darstellbar sind, derart, daß unterschiedliche Meßbereiche und Meßgrößen mittels des Anzeigeinstruments (1) darstellbar sind.

9. Anzeigeinstrument (1) nach einem der vorherigen Ansprüche, **dadurch gekennzeichnet,** daß die Anzeige (2) eine elektro-optische, -mechanische, -phoretische, -chemische oder ferroelektrische Anzeige ist.

10. Anzeigeinstrument (1) nach einem der vorherigen Ansprüche, **dadurch gekennzeichnet,** daß die Anzeige (2) matrixförmig angeordnete Bildpunkte und/oder Segmente zur Darstellung von Information insbesondere Skalen und/oder Skalenbildern (5), Schrift (6) und/oder Grafik (9, 10) hat.

11. Anzeigeinstrument (1) nach einem der vorherigen Ansprüche, **dadurch gekennzeichnet,** daß die Anzeige besteht aus einer mit einem Maskendruck versehenen Folie, in deren Maske Skalen und/oder Symbole vorgesehen sind und wenigstens einer in Betrachtungsrichtung hinter dieser Folie angeordneten farbigen Folie, sowie wenigstens einer dahinter angeordneten elektronisch ansteuerbaren Lichtquelle.

12. Anzeigeinstrument (1) nach einem der vorherigen Ansprüche, **dadurch gekennzeichnet,** daß die Anzeige (2) und das Anzeigeorgan (3,30) zur Anzeige von Informationen in einem Verkehrsmittel insbesondere PKW, LKW,, Motorrad, Flugzeug oder Schiff verwendet wird.

13. Anzeigeinstrument (1) nach einem der vorherigen Ansprüche, **dadurch gekennzeichnet,** daß mindestens eine Skala oder ein Skalenbild (5) und mindestens eine weitere digitale Anzeige (6, 9, 10) vom Text oder Grafik von der Anzeige (2) gleichzeitig dargestellt ist.
